Europäisches Patentamt

(19) European Patent Office

Office européen des brevets

(11) Numéro de publication: **0 060 189**
**B1**

## (12) FASCICULE DE BREVET EUROPEEN

(45) Date de publication du fascicule du brevet:
21.08.85

(51) Int. Cl.⁴: **B 60 L 5/22**

(21) Numéro de dépôt: **82400363.6**

(22) Date de dépôt: **03.03.82**

(54) Tête de captage pour pantographe.

(30) Priorité: **04.03.81 FR 8104290**

(43) Date de publication de la demande:
**15.09.82 Bulletin 82/37**

(45) Mention de la délivrance du brevet:
**21.08.85 Bulletin 85/34**

(84) Etats contractants désignés:
**AT BE CH DE GB IT LI NL SE**

(56) Documents cités:
**DE - A - 2 909 855**
**FR - A - 2 136 975**
**GB - A - 404 396**

(73) Titulaire: **FAIVELEY ENTREPRISES, 93, rue du Docteur-Bauer, F-93404 Saint-Ouen Cedex (FR)**

(72) Inventeur: **Graziano, Charles, 34, boulevard Stalingrad, F-93270 Sevran (FR)**
Inventeur: **Milleville, André, 12, allée de Bretagne, F-95460 Ezanville (FR)**

(74) Mandataire: **Bouju, André, 38 Avenue de la Grande Armée, F-75017 Paris (FR)**

BUNDESDRUCKEREI BERLIN

## Description

La présente invention concerne une tête de captage pour pantographe selon le préambule de la revendication 1.

On connaît des têtes de captage dont la suspension comporte un sous-ensemble à chacune des extrémités de l'archet. Pour éviter tout coincement, ces sous-ensembles sont articulés à l'archet qui peut ainsi accuser un certain roulis relativement à un axe parallèle à la direction d'avancement du véhicule. Pour limiter ce roulis qui serait à son tour à l'origine de coincements s'il devenait trop important, les sous-ensembles ont une raideur globale élevée (10 000 daN/m) et une course élastique réduite.

Ces sous-ensembles absorbent les petites irrégularités, tandis que la structure repliable absorbe les irrégularités ou oscillations de moyenne et grande amplitude et de faible fréquence, telles que celles dues au passage à proximité des poteaux porteurs de la caténaire.

Ce type de pantographe n'est pas adapté aux vitesses élevées, auxquelles il apparaît des oscillations, telles que celles dues aux poteaux porteurs, qui présentent une amplitude excessive relativement à la course maximale des plongeurs, et qui ne peuvent pas non plus être absorbées par la structure repliable. En effet, leur fréquence, proportionnelle à la vitesse, n'est plus compatible avec l'inertie de la structure repliable et avec la force de rappel vers le haut qui lui est appliquée, celle-ci étant déterminée par la force de contact nécessaire entre l'archet et la caténaire pour capter le courant sans trop soulever le fil de contact.

Une tête de captage du type indiqué dans le préambule de la revendication 1 qui remédie à ces inconvénients, est connue d'après le brevet FR-A-2 136 975.

Dans la tête de captage chaque sous-ensemble est constitué par un plongeur articulé à l'archet selon un axe parallèle à la direction d'avancement. L'un des plongeurs est relié à l'archet par une jumelle, c'est-à-dire une double biellette qui compense les écarts éventuels entre la distance séparant les deux plongeurs et la distance séparant leurs points d'attache sur l'archet. Des moyens de couplage imposent aux plongeurs d'avoir à chaque instant le même enfoncement. Ceci assure à l'archet un déplacement dans lequel il reste parallèle à lui-même lorsqu'il est vu selon la direction d'avancement. On peut ainsi accroître la course élastique des plongeurs sans risque de roulis excessif de l'archet.

Le GB-A-404 396 décrit une tête de captage comprenant à chaque extrémité de l'archet, un ressort installé entre la structure mobile et un sabot auquel est fixé l'archet. Entre la structure mobile et le sabot sont en outre montés deux compas opposés. Pour assurer à l'archet, vu selon la direction d'avancement, un débattement parallèle à lui-même, les compas des deux extrémités de l'archet sont reliés par paires par des tiges de couplage.

Il est précisé page 5, lignes 50 à 62du brevet précité, qu'en l'absence des tiges de couplage, le parallélisme de l'archet vu selon la direction d'avancement n'est pas assuré.

Ainsi, dans les deux documents précités, on a conservé la suspension classique avec, à chaque extrémité de l'archet, un sous-ensemble inadapté pour assurer par lui-même le parallélisme de l'archet vu selon la direction d'avancement. Le GB-A-404 396 peut donner l'impression qu'en évitant les jeux dans chaque compas, on assurerait le parallélisme sans avoir recours aux barres de couplage. Mais il faudrait dans ce cas accompagner cette absence de jeux d'une précision quasiment irréalisable dans le positionnement de chaque structure relativement à l'autre structure et à l'archet. C'est bien pour cette raison que dans le FR-A-2 136 975, on a prévu par articulations et jumelles, des possibilités d'écarts angulaire et translationnel entre les deux plongeurs et l'archet. Ceci serait probablement nécessaire dans le GB-A-404 396 qui ne mentionne la possibilité de supprimer les barres de couplage qu'à titre de variante sans donner aucun détail. En tout état de cause, dans un document comme dans l'autre, le parallélisme de l'archet est assuré par des moyens de couplage surajoutés à la suspension classique entre les deux structures d'extrémité.

Les moyens de couplage décrits dans les documents précités permettent certes d'accroître sans risque le débattement de la tête de captage.

Cependant, ces moyens de couplage ont plusieurs inconvénients. Ils compliquent la tête de captage, l'alourdissent et augmentent son inertie, ce qui est grave pour les grandes vitesses. Ils augmentent également la prise au vent de la tête de captage, ce qui est également gênant pour l'équilibre du pantographe à grande vitesse.

Le but de l'invention est de remédier à ces inconvénients en réalisant une tête de captage simple, légère et peu sensible au vent tout en assurant le maintien de l'archet, vu selon la direction de marche, parallèle à lui-même au cours de ses débattements.

Suivant l'invention, une tête de captage selon le préambule de la revendication 1 est caractérisée en ce que, au titre des moyens de parallélisme, l'attache du premier organe coulissant (39) avec l'archet (23) et l'attache du second organe coulissant (29) avec la structure mobile (3) sont sensiblement rigides à l'égard de la rotation d'axe (ZZ) parallèle à la direction d'avancement.

Ainsi, l'archet est monté à coulisse par rapport à la structure mobile. Il n'est donc plus nécessaire de prévoir deux sous-ensembles pour supporter l'archet, et encore moins de coupler ces deux sous-ensembles pour leur imposer des enfoncements égaux. La tête de captage est donc simplifiée et allégée, et sa prise au vent réduite.

De préférence, les deux organes mobiles de la glissière sont deux organes télescopiques d'un plongeur de suspension muni d'un ressort hélicoïdal sollicitant les deux organes télescopiques l'un à l'opposé de l'autre. Ainsi, la glissière assure en même temps le guidage des moyens élastiques.

D'autres particularités et avantages de l'invention résulteront encore de la description ci-après.

Aux dessins annexés, donnés à titre d'exemples non limitatifs:

la figure 1 est une vue en perspective du pantographe conforme à l'invention;

la figure 2 est une vue de face de la tête de captage de ce pantographe, les soufflets étant démontés;

la figure 3 est une vue en direction opposée à celle de la figure 2;

la figure 4 est une vue en élévation latérale et en coupe de la tête de captage en position d'extension;

la figure 5 est une vue de dessus, avec coupe partielle, de la tête de captage; et

la figure 6 est une vue analogue à la figure 4, le plongeur étant en position totalement rétractée.

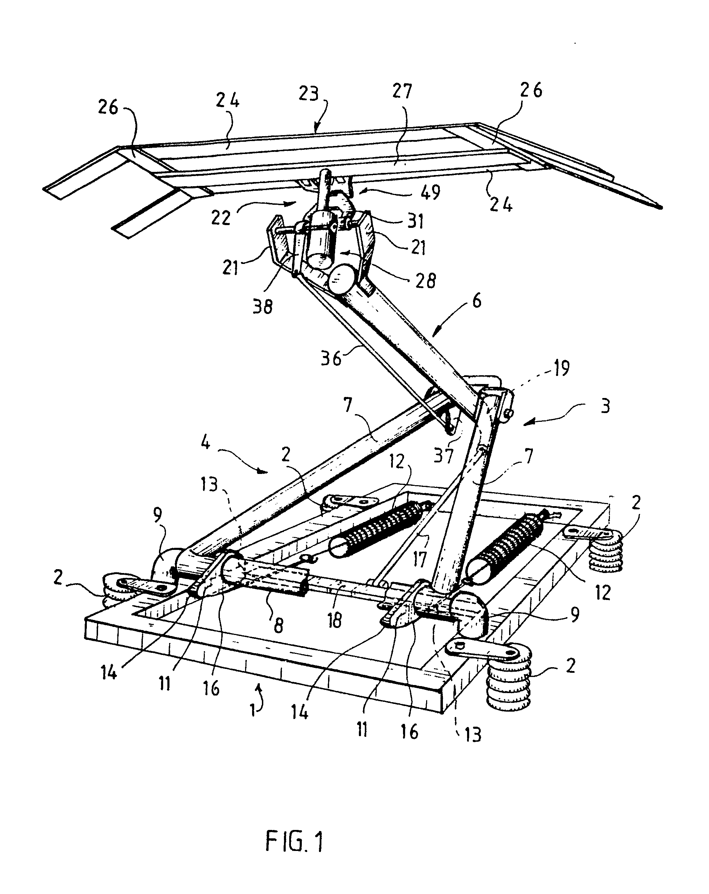

Comme le montre la figure 1, le pantographe comprend une embase 1 formée d'un cadre métallique rectangulaire, et destinée à être montée sur le toit d'un véhicule ferroviaire par l'intermédiaire d'isolateurs électriques 2. L'embase 1 porte une structure repliable 3 comprenant un bras inférieur 4 auquel est articulé un bras supérieur 6.

Le bras inférieur 4 comprend deux poutrelles tubulaires 7 dirigées obliquement l'une vers l'autre depuis l'embase 1 jusqu'au bras supérieur 6. A leur extrémité adjacente à l'embase 1, les bras 7 sont soudés à un axe tubulaire 8 qui, en service, est sensiblement parallèle au sol et perpendiculaire à la direction d'avancement du véhicule. L'axe 8 est monte en rotation par rapport à l'embase 1, entre deux crapaudines 9 portées par deux longerons opposés de l'embase 1.

Entre les bras 7, deux cames 11 sont fixées rigidement à l'axe tubulaire 8. Des ressorts de traction 12, destinés à solliciter la structure repliable 3 vers sa position déployée, sont attachés par l'une de leurs extrémités à l'un des longerons de l'embase 1 parallèle à l'axe 8. Leur autre extrémité est attachée à des élingues 13 fixées chacune à l'une des cames 11 en un point d'attache 14. Entre les points d'attaches 14 et les ressorts 12, les élingues 13 sont enroulées autour du profil 16 des cames 11.

Une bielle de couplage angulaire 17, articulée par l'une de ses extrémités à une traverse 18 de l'embase 1 et par son autre extrémité à une corne 19 prolongeant le bras supérieur 6 au-delà de son articulation avec le bras inférieur 4, confère au bras supérieur 6 une inclinaison déterminée pour chaque inclinaison du bras inférieur 4.

Le bras supérieur 6 est constitué d'une poutrelle tubulaire unique terminée à son extrémité opposée au bras 4, par une fourche entre les bras 21 de laquelle est montée la tête de captage 22 qui comporte notamment l'archet 23 destiné à être en contact électrique avec la caténaire. L'archet 23 comprend de façon connue deux barres de contact 24 parallèles à l'axe 8 et recourbées à leurs extrémités. Les deux barres 24 sont reliées juste en deçà de leurs extrémités coudées, par deux barrettes 26 perpendiculaires à l'axe 8 et supportées en leur milieu par une traverse porteuse commune 27, parallèle aux barres 24. La traverse 27 peut avoir une certaine élasticité en torsion permettant à l'archet 23 de rester en contact correct avec la caténaire au cours des variations d'altitude de cette dernière.

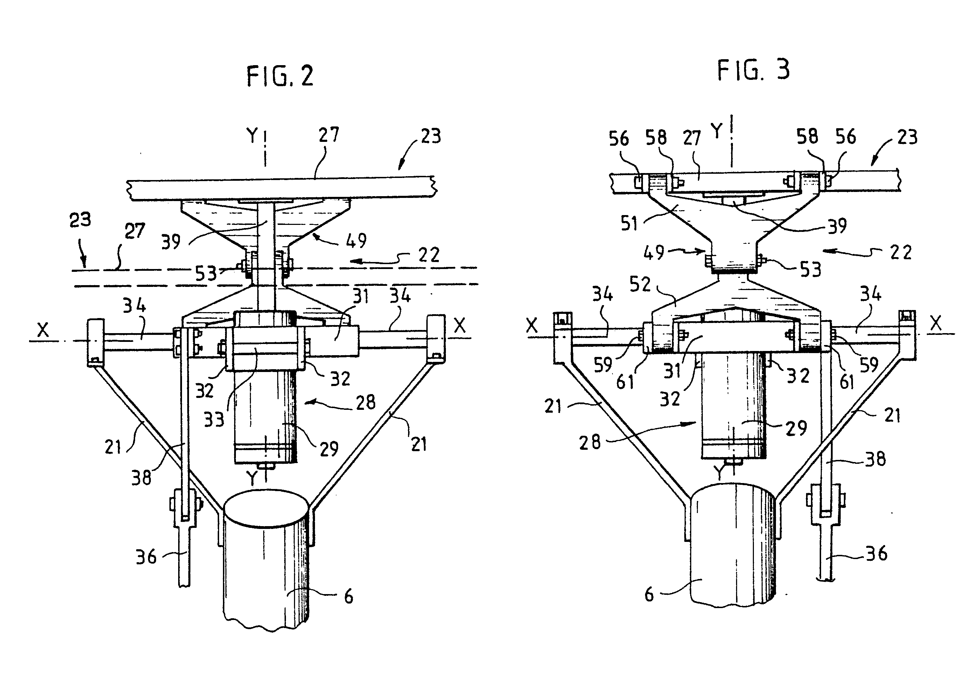

La tête de captage 22 comprend également une suspension assurant à l'archet 23 relativement à l'extrémité des bras de fourche 21, un débattement élastique selon une direction YY (figures 2 à 4) perpendiculaire au plan de l'embase 1, c'est-à-dire en service perpendiculaire au sol.

Conformément à l'invention, la suspension précitée comprend une glissière formée de deux éléments télescopiques constituant la tige 39 et le corps 29 d'un plongeur central unique 28 interposé entre les branches de fourche 21 et le milieu de l'archet 23, c'est-à-dire, dans l'exemple représenté, le milieu de la traverse 27.

Comme le montrent les figures 2 et 3, le corps 29 du plongeur 28 est fixé à un sabot 31 au moyen d'un système de fixation comprenant deux brides 32 et un tirant 33. Le sabot 31 porte rigidement deux tourillons opposés 34 dirigés selon un axe X-X parallèle à l'axe 8, et montés en rotation par l'intermédiaire de roulements à bille, dans les extrémités des bras de fourche 21.

Une bielle anti-balancement 36, articulée entre l'extrémité d'une patte 37 solidaire du bras inférieur 4 et dirigée vers l'embase 1, et l'extrémité d'un levier 38 dirigé également vers l'embase 1 et fixé rigidement au sabot 31, assure que l'axe YY du plongeur 28 reste sensiblement perpendiculaire au plan de l'embase 1 quelle que soit l'inclinaison du bras supérieur 6.

Le plongeur 28 comprend en outre une tige 39 montée à coulisse dans le corps 29, et emmanchée et soudée par son extrémité supérieure 39a dans un perçage 30 de la traverse 27.

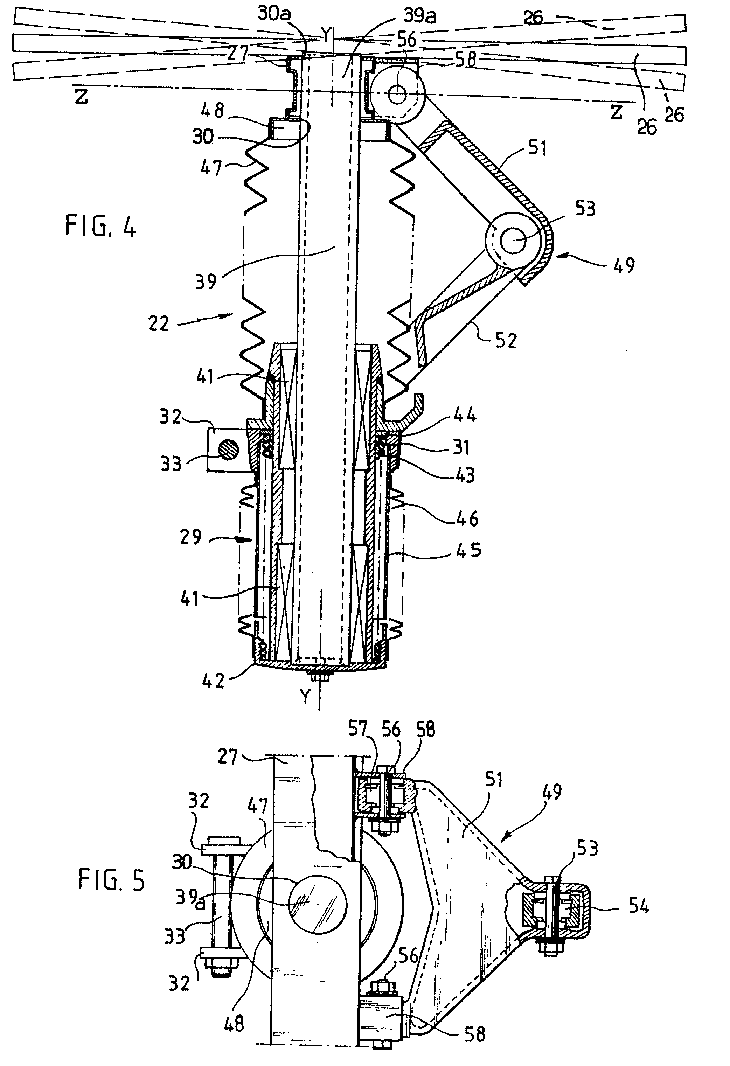

Ainsi, comme le montre la figure 2 par comparaison des positions de l'archet 23 représentées respectivement en trait plein et en trait mixte, ledit archet 23, vu comme à la figure 2, c'est-à-dire selon la direction prévue d'avancement du pantographe, reste toujours parallèle à lui-même et à l'axe XX lors des débattements de la tige 39 dans le corps 29. En effet, l'emmanchement 30—39a interdit toute rotation sensible des barres de contact 24 par rapport à la tige 39 autour d'un axe tel que ZZ (figure 4) parallèle à la direction d'avancement prévue pour le pantographe.

Par contre, comme le montre la figure 4, grâce à la flexibilité en torsion de la traverse 27, les barrettes 26, et par suite l'archet 23 ont une certaine liberté d'inclinaison par rotation autour d'un axe parallèle à l'axe XX.

En se référant encore à la figure 4, deux glissières à circulation de billes 41 sont interposées entre le corps 29 et la tige 39 pour faciliter la translation de cette dernière. La tige 39 traverse axialement le corps 29. Une coupelle 42 fixée à l'extrémité de la tige 39 opposée à la traverse 27 recouvre la partie inférieure du corps 29. Un ressort de traction 43 dont les spires sont vissées, à une de ses extrémités, sur une douille filetée 44 fixée autour du corps 29, et, à son autre extrémité, dans la paroi interne taraudée de la coupelle 42, tend en permanence à ramener la coupelle 42 contre la base du corps 29, c'est-à-dire à éloigner la traverse 27 du corps 29. Une tôle protectrice tubulaire 45 partant du sabot 31 vers la coupelle 42, ainsi qu'un soufflet 46 fixé à la tôle 45 sous le sabot 31 par l'une de ses extrémités et à la coupelle 42 par son autre extrémité, protègent l'ensemble des pièces du plongeur. Un autre soufflet 47 fixé au corps 29 au-dessus du sabot 31, et à une collerette 48 fixée sous la traverse 27, complète cette protection.

Selon une autre caractéristique importante, la tête de captage comprend des moyens de guidage pour immobiliser l'archet 23 en rotation par rapport à la structure repliable 3 autour de l'axe Y-Y du plongeur 28, cet axe Y-Y étant sensiblement perpendiculaire au sol grâce à la biellette 36.

Ces moyens de guidage comprennent un compas 49 formé de deux triangles 51, 52, articulés l'un à l'autre par l'un de leurs sommets au moyen d'une rotule. Comme le montre la figure 5, le triangle supérieur 51 présente à cet effet une chape dans laquelle est fixé un axe 53 parallèle à l'axe 8 et qui peut tourillonner par rapport au triangle 52 par l'intermédiaire d'un roulement à bille oscillant 54. Les deux autres sommets du triangle supérieur 51, qui constituent l'une des extrémités du compas 49, sont articulés au moyen d'axes 56 parallèles à l'axe 53, et de roulements à billes 57, entre des chapes 58 soudées à la traverse 27.

Les deux autres sommets du triangle inférieur 52, qui constituent l'autre extrémité du compas 49, sont articulés de la même manière, au moyen d'axes 59 parallèles à l'axe 53, et de roulements à bille, entre des chapes 61 fixées au sabot 31.

Dans le cadre de l'invention, la course de la tige 39 par rapport au corps 29 du plongeurs 28 peut être d'au moins 50 mm environ, et la raideur du ressort de traction 43, inférieure à 2500 N/m.

Selon une réalisation particulièrement avantageuse de l'invention, la course de la tige 39 du plongeur est de 150 mm, le diamètre de cette tige est de 40 mm, et la raideur des moyens élastiques du plongeur est de 1200 N/m.

La tête de captage qui vient d'être décrite fonctionne de la façon suivante:

Lorsque l'archet 23 n'est soumis à aucune force dirigée vers l'embase 1, et en particulier lorsqu'il n'est pas en service en contact contre une caténaire, la tête de captage 22 est dans la position représentée à la figure 4, c'est-à-dire que la coupelle 42 est en butée à la base du corps 29, et la traverse 27 est dans sa position la plus éloignée du corps 29. L'angle formé par les triangles 51 et 52 est alors maximal et voisin de 90°.

Grâce au système cames 11-ressorts 12, le poids associé à la masse mobile de la structure repliable est équilibré, et lorsque l'archet 23 est en contact d'une caténaire, l'effort statique avec lequel il est appliqué contre la caténaire est sensiblement constant quelle que soit l'extension de la structure 3. La bielle anti-balancement 36 maintient l'archet 23 sensiblement parallèle au plan ce l'embase 1 lorsque la traverse 27 n'est soumise à aucune torsion.

Si la caténaire, en cours de déplacement, s'incline pour se rapprocher ou s'éloigner du sol, les inclinaisons correspondantes de l'archet 23 sont assurées par la souplesse en torsion de la traverse 27 ou tout autre système approprié.

A l'arrêt, la force d'application de l'archet 23 sur la caténaire se traduit par un certain enfoncement à micourse de la tige 39 dans le corps 29. Ceci s'accompagne d'une extension du ressort de traction 43 et du soufflet 46, et d'une contraction du soufflet 47. L'angle entre les triangles 51 et 52 se referme et l'axe 53 s'éloigne de la tige 39.

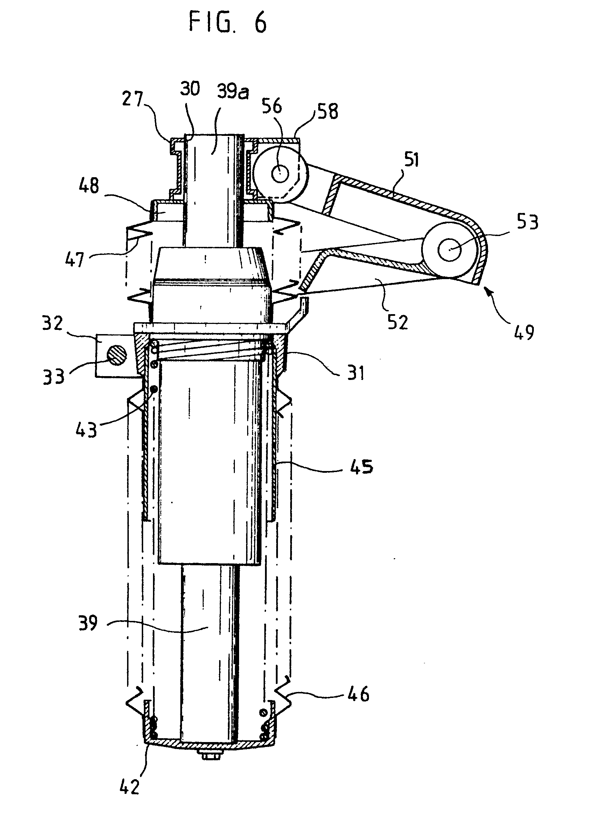

La position ainsi obtenue est intermédiaire entre la position d'extension maximale de la tige 39 hors du corps 29 représentée à la figure 4, et la position de contraction maximale de la tige 39 à l'intérieur du corps 29 représentée à la figure 6. Comme le montre cette figure, lorsque la tige 39 se rétracte dans le corps 29, et que le ressort 43 s'étire, l'extrémité de la tiege 39 opposée à la traverse 27, fait saillie hors du corps 29, en direction de l'embase 1.

En cours de marche, le plongeur 28 absorbe la majeure parties des irrégularités ou oscillations de faible et moyenne amplitude, tandis que la structure repliable 3 a essentiellement pour rôle de donner au corps 29 du plongeur 28 une altitude moyenne lui permettant d'adsorber ces irrégularités en extension comme en contraction du ressort 43.

Même lorsque la caténaire porte sur l'archet 23 à proximité des extrémités recourbées des barres 24, au lieu de porter en leur milieu au-dessus de la tige 39, tout roulis sensible de l'archet 23 est évité et même en cas d'oscillations ou irrégularités de grande amplitude absorbées par le plongeur 28, la tête de captage ne risque pas de se coincer, ou d'accuser un roulis exagéré.

En outre, le compas 49 empêche l'entrée en rotation de l'archet 23 autour de l'axe Y-Y sous l'effet du couple exercé par le frottement de la caténaire sur les barres 24 dans le cas précité où le point de contact avec la caténaire est déporté latéralement.

La tête de captage 22 comprenant un seul plongeur, il n'est pas nécessaire à la construction de positionner rigoureusement l'axe de ce plongeur par rapport à d'autres éléments de la tête de captage tels que l'axe d'un autre plongeur, en dépit du fait que l'archet 23 est fixé au lieu d'être articulé à la tige 39 du plongeur 29.

De par sa structure, la tête de captage conforme à l'invention, est peu sensible aux effets aérodynamiques, et grâce à la faible superficie de son profil frontal, elle permet de réduire encore l'influence de ces effets. Combinée à la structure repliable qui a été décrite ci-dessus et qui présente elle-même un profil frontal de faible superficie, la tête de captage est encore plus avantageuse à cet égard.

L'invention permet de réaliser un pantographe prévu pour des vitesses très élevées (300 km/h par exemple en ce qui concerne les trains actuels), de manière étonnamment simple et économique en comparaison avec les pantographes décrits dans l'état de la technique pour ces applications.

Bien entendu, l'invention n'est pas limitée à l'exemple décrit et représenté, et de nombreux aménagements peuvent être apportés à cet exemple sans sortir du cadre de l'invention telle qu'elle est revendiquée.

Ainsi, la tête de captage peut être adaptée à d'autres modes de réalisation de la structure repliable, par exemple telle que les structures du type losange, ou encore être adaptée à des perches de véhicules tels que les trolleybus ou les tramways. En effet, même si elle est adaptée aux grandes vitesses, la tête de captage peut également être avantageuse pour des véhicules plus lents surtout si les caténaires présentent des variations de flexibilité importantes.

Le montage du plongeur au sommet de la structure mobile peut être modifié pourvu que les propriétés cinématiques essentielles de l'invention soient conservées.

Les moyens de guidage pour immobiliser l'archet en rotation autour de l'axe du plongeur peuvent être modifiés. En particulier, ces moyens peuvent résider dans une section particulière de la tige 39, cette tige 39 coulissant dans une glissière de section correspondante aménagée dans le corps tel que 29. Ces moyens peuvent également être constitués par un second plongeur monté parallèlement au premier entre le sabot tel que 31 et la traverse telle que 27, de manière que les axes des deux plongeurs soient portés par un plan commun perpendiculaire à l'axe tubulaire 8. Dans ce cas, la raideur des moyens élastiques de la tête de captage est bien entendu la somme des raideurs des deux plongeurs.

Par ailleurs, divers dispositifs peuvent être adjoints au pantographe, tels que par exemple un dispositif pneumatique ou autre pour replier la structure 3 à l'encontre de l'effet des ressorts 12.

**Revendications**

1. Tête de captage pour pantographe, comprenant un archet (23) assurant le contact avec la caténaire, et une suspension permettant un débattement élastique de l'archet relativement à la structure mobile (3) du pantographe selon une direction (YY) transversale au sol, cette suspension comprenant des moyens de parallélisme pour maintenir l'archet (23) vu sensiblement selon la direction (ZZ) prévue de déplacement du pantographe, parallèle à lui-même au cours de ses débattements par rapport à la structure mobile (3), ces moyens de parallélisme comprenant une glissière (29, 39) comportant un premier organe coulissant (39) attaché à l'archet (23) et un second organe (29) coulissant par rapport au premier (39) selon la direction de débattement élastique (YY) et attaché à la partie supérieure de la structure mobile (3), des moyens élastiques (43) prenant appui sur le sommet de la structure mobile (3) du pantographe et sollicitant l'archet (23) vers la caténaire, et des moyens de guidage (49) pour, relativement à la structure mobile (3), sensiblement immobiliser l'archet (23) en rotation d'axe parallèle à la direction de débattement élastique (YY), caractérisée en ce que, au titre des moyens de parallélisme, l'attache du premier organe coulissant (39) avec l'archet (23) et l'attache du second organe coulissant (29) avec la structure mobile (3) sont sensiblement rigides à l'égard de la rotation d'axe (ZZ) parallèle à la direction d'avancement.

2. Tête de captage conforme à la revendication 1, caractérisée en ce que les deux organes mobiles de la glissière sont deux organes télescopiques (29, 39) d'un plongeur de suspension muni d'un ressort hélicoïdal (43) sollicitant les deux organes télescopiques (29, 39) l'un à l'opposé de l'autre.

3. Tête de captage conforme à la revendication 2, caractérisée en ce que le plongeur (28) comprend un corps (29) attaché à la structure mobile (3) et une tige (39) mobile en translation axiale dans le corps (29), cette tige (39) étant attachée par une extrémité à l'archet (23) et engagée par son autre extrémité dans le corps (29), un ressort de traction (43) étant monté entre cette extrémité de la tige (39) et le corps (29), la tige (39) pouvant, en position étirée du ressort (43), faire saillie du corps (29) à l'opposé de l'archet (23).

4. Tête de captage conforme à la revendication 3, caractérisée en ce que deux glissières à billes (41) sont interposées entre la tige (39) et le corps (29) du plongeur (28).

5. Tête de captage conforme à l'une des revendications 2 à 4, caractérisée en ce que la course maximale de la tige (39) du plongeur (28) est d'au moins 50 mm.

6. Tête de captage conforme à la revendication 5, caractérisée en ce que la raideur des moyens élastiques (43) du plongeur (28) est inférieure à 2500 N/m et en ce que la course de la tige (39) du plongeur (28) est d'au moins environ 150 mm ou plus.

7. Tête de captage conforme à la revendication 5 ou 6, caractérisée en ce que le plongeur est unique (28).

8. Tête de captage conforme à la revendication 7, caractérisée en ce que le plongeur unique (28) est monté sensiblement au milieu de l'archet (23).

9. Tête de captage conforme à l'une des revendications 7 ou 8, caractérisée en ce que les moyens de guidage comprennent un compas (49) dont une extrémité est articulée à l'archet (23) et l'autre extrémité est articulée à une partie (31) de la tête de captage (22) qui est attachée à la structure mobile (3) du pantographe.

10. Tête de captage conforme à la revendication 9, caractérisée en ce que les deux branches (51, 52) du compas (49) sont articulées au moyen d'une rotule (54).

11. Tête de captage conforme à l'une des revendications 2 à 10, caractérisée en ce qu'elle est montée à pivotement au sommet de la structure repliable (3) selon un axe (X-X) sensiblement parallèle à l'archet (23), sa position étant commandée par un système anti-balancement (36, 37, 38), de façon que le plongeur (28) demeure sensiblement perpendiculaire au sol.

12. Tête de captage conforme à la revendication 11, caractérisée en ce qu'elle comprend un sabot (31) contre lequel est fixé le corps (29) du plongeur (28), ce sabot (31) portant deux tourillons (34) opposés, destinés à permettre le pivotement de la tête de captage (22) par rapport à la structure repliable (3), ainsi qu'un levier (38) transversal à l'axe de pivotement (X-X) et permettant de relier le sabot (31) au système anti-balancement (36, 37).

13. Tête de captage conforme à la revendication 12, dans laquelle les moyens de guidage de l'archet (23) sont un compas (49) dont une extrémité est articulée à l'archet (23), caractérisée en ce que l'autre extrémité du compas (49) est articulée au sabot (31).

**Patentansprüche**

1. Pantograph-Stromabnehmerkopf, mit einem Bügel (23), der den Kontakt mit der Kettenoberleitung gewährleistet, und einer Aufhängung, die eine elastische Auslenkung des Bügels relativ zu der beweglichen Struktur (3) des Pantographs in einer zum Boden transversalen Richtung (YY) gestattet, wobei diese Aufhängung Parallelhaltungsmittel umfaßt, um den Bügel (23) im wesentlichen in der vorgesehenen Bewegungsrichtung (ZZ) betrachtet im Verlaufe seiner Auslenkungen gegenüber der beweglichen Struktur (3) parallel zu sich selbst zu halten, wobei diese Parallelhaltungsmittel eine Gleitführung (29, 39) umfassen, die ein erstes, an dem Bügel (23) befestigtes Schiebeorgan (39) und ein zweites Organ (29) umfaßt, welches in bezug auf das erste (39) in der Richtung elastischer Auslenkung (YY) gleitverschiebbar und an dem oberen Teil der beweglichen Struktur (3) befestigt ist, wobei elastische Mittel (43) sich am Scheitel der beweglichen Struktur (3) des Pantographs abstützen und den Bügel (23) gegen die Kettenoberleitung beaufschlagen, und Führungsmittel (49) umfassen, um den Bügel (23) relativ zu der beweglichen Struktur (3) im wesentlichen drehfest bezüglich einer Achse zu halten, die parallel zu der Richtung elastischer Auslenkung (YY) ist, dadurch gekennzeichnet, daß als Parallelhaltungsmittel die Befestigung des ersten Schiebeorgans (39) am Bügel (23) sowie die Befestigung des zweiten Schiebeorgans (29) an der beweglichen Struktur (3) im wesentlichen starr ausgebildet sind bezüglich der Drehbewegung um die Achse (ZZ), welche parallel zur Richtung der Vorwärtsbewegung ist.

2. Stromabnehmerkopf nach Anspruch 1, dadurch gekennzeichnet, daß die beiden beweglichen Organe der Gleitführung zwei Teleskoporgane (29, 39) einer Aufhängungs-Eintauchanordnung sind, die mit einer Schraubenfeder (43) versehen ist, welche die zwei Teleskoporgane (29, 39) in zueinander entgegengesetzten Richtungen beaufschlagt.

3. Stromabnehmerkopf nach Anspruch 2, dadurch gekennzeichnet, daß die Eintauchanordnung (28) einen Körper (29) umfaßt, welcher an der beweglichen Struktur (3) befestigt ist, und eine axial translationsbewegliche Stange (39) in den Körper (29) aufweist, wobei diese Stange (39) an einem Ende am Bügel (23) befestigt und an ihrem anderen Ende in den Körper (29) eingeführt ist, wobei eine Zugfeder (43) zwischen diesem Ende der Stange (39) und dem Körper (29) angebracht ist und die Stange (39) in der gestreckten Stellung der Feder (43) aus dem Körper (29) auf der dem Bügel (23) gegenüberliegenden Seite herausragen kann.

4. Stromabnehmerkopf nach Anspruch 3, dadurch gekennzeichnet, daß zwei Kugelgleitführungen (41) zwischen der Stange (39) und dem Körper (29) der Eintauchanordnung (28) eingefügt sind.

5. Stromabnehmerkopf nach einem der Ansprüche 2 bis 4, dadurch gekennzeichnet, daß der maximale Hub der Stange (39) der Eintauchanordnung (28) wenigstens 50 mm beträgt.

6. Stromabnehmerkopf nach Anspruch 5, dadurch gekennzeichnet, daß die Steifigkeit der elastischen Mittel (43) der Eintauchanordnung (28) geringer als 2500 N/mm ist und daß der Hub der Stange (39) der Eintauchanordnung (28) wenigstens etwa 150 mm oder mehr beträgt.

7. Stromabnehmerkopf nach Anspruch 5 oder 6, dadurch gekennzeichnet, daß nur eine Eintauchanordnung (28) vorhanden ist.

8. Stromabnehmerkopf nach Anspruch 7, dadurch gekennzeichnet, daß die einzige Eintauchanordnung (28) im wesentlichen in der Mitte des Bügels (23) angebracht ist.

9. Stromabnehmerkopf nach einem der Ansprüche 7 und 8, dadurch gekennzeichnet, daß die Führungsmittel eine zirkelartige Anordnung (49) umfassen, wovon ein Ende an dem Bügel (23) und das andere Ende an einem Teil (31) des Abnehmerkopfes (22) angelenkt ist, der an der beweglichen Struktur (3) des Pantographs befestigt ist.

10. Stromabnehmerkopf nach Anspruch 9, dadurch gekennzeichnet, daß die zwei Schenkel (51, 52) der zirkelartigen Anordnung (49) mittels einer Gelenkkugel (54) angelenkt sind.

11. Stromabnehmerkopf nach einem der Ansprüche 2 bis 10, dadurch gekennzeichnet, daß er am Scheitel der einklappbaren Struktur (3) schwenkbar um eine Achse (X-X) gelagert ist, welche im wesentlichen parallel zu dem Bügel (23) ist, wobei seine Stellung durch ein Gegenauslenksystem (36, 37, 38) derart gesteuert wird, daß die Eintauchanordnung (28) im wesentlichen senkrecht zum Boden verbleibt.

12. Stromabnehmerkopf nach Anspruch 11, dadurch gekennzeichnet, daß er einen Fuß (31) umfaßt, an dem der Körper (29) der Eintauchanordnung (28) befestigt ist, wobei dieser Fuß (31) zwei einander gegenüberliegende Drehzapfen (34) trägt, die dazu bestimmt sind, die Schwenkbewegung des Abnehmerkopfes (22) bezüglich der einklappbaren Struktur (3) zuzulassen, sowie einen Hebel (38) umfaßt, welcher transversal zur Schwenkachse (X-X) ist und es ermöglicht, den Fuß (31) mit dem Gegenauslenksystem (36, 37) zu verbinden.

13. Stromabnehmerkopf nach Anspruch 12, bei welchem die Führungsmittel des Bügels (23) eine zirkelartige Anordnung (49) sind, wovon ein Ende an dem Bügel (23) angelenkt ist, dadurch gekennzeichnet, daß das andere Ende der zirkelartigen Anordnung (49) am Fuß (31) angelenkt ist.

**Claims**

1. A collector head for a pantograph, comprising a bow (23) to provide contact with the catenary, and a suspension allowing resilient deflection of the bow relatively to the movable structure (3) of the pantograph in a transverse direction (YY) to the ground, said suspension comprising parallelism means to maintain the bow (23) as considered substantially in the required direction (ZZ) of displacement of the pantograph, parallel to itself during its deflections with respect to the movable structure (3), said parallelism means comprising a guide (29, 39) having a first sliding member (39) fixed to the bow (23) and a second member (29) sliding with respect to the first member (39) in the direction of resilient deflection (YY) and fixed to the top part of the movable structure (3), resilient means (43) bearing on the top of the movable structure (3) of the pantograph and urging the bow (23) towards the catenary, and guide means (49) in order substantially to lock the bow (23) relatively to the movable structure (3), in respect of rotation of an axis parallel to the direction of resilient deflection (YY), characterised in that as parallelism means the fixing of the first sliding member (39) to the bow (23) and the fixing of the second sliding member (29) to the movable structure (3) are substantially rigid in respect of rotation of axis (ZZ) parallel to the direction of advance.

2. A collector head according to claim 1, characterised in that the two movable members of the guide are two telescopic members (29, 39) of a suspension plunger provided with a helical spring (43) urging the two telescopic members (29, 39) in opposition to one another.

3. A collector head according to claim 2, characterised in that the plunger (28) comprises a body (29) fixed to the movable structure (3) and a rod (39) which is movable in axial translation in the body (29), said rod (39) being fixed by one end to the bow (23) and engaged by its other end in the body (29), a traction spring (43) being mounted between said end of the rod (39) and the body (29), the rod being able to project from the body (29) away form the bow (23) when the spring (43) is in the extended position.

4. A collector head according to claim 3, characterised in that two ball type guides (41) are interposed between the rod (39) and the body (29) of the plunger (28).

5. A collector head according to any one of claims 2 to 4, characterised in that the maximum travel of the rod (39) of the plunger (28) is at least 50 mm.

6. A collector head according to claim 5, characterised in that the rigidity of the resilient means (43) of the plunger (28) is less than 2500 N/mm and in that the travel of the rod (39) of the plunger (28) is at least about 150 mm or more.

7. A collector head according to claim 5 or 6, characterised in that the plunger is a single member (28).

8. A collector head according to claim 7, characterised in that the single plunger (28) is mounted substantially in the middle of the bow (23).

9. A collector head according to claim 7 or 8, characterised in that the guide means comprise a calliper (49) one end of which is articulated on the bow (23) and the other end of which is articulated on a part (31) of the collector head (22) which is fixed to the movable structure (3) of the pantograph.

10. A collector head according to claim 9, characterised in that the two arms (51, 52) of the calliper (49) are articulated by means of a swivel joint (54).

11. A collector head according to any one of claims 2 to 10, characterised in that it is mounted pivotally at the top of the folding structure (3) along an axis (X-X) substantially parallel to the bow (23), its position being controlled by an anti-rock system (36, 37, 38) so that the plunger (28) remains substantially perpendicular to the ground.

12. A collector head according to claim 11, characterised in that it comprises a shoe (31) against which the body (29) of the plunger (28) is fixed, said shoe (31) having two opposite trunnions (34) adapted to allow pivoting of the collector head (22) with respect to the folding structure (3), and a lever (38) extending transversely to the pivot axis (X-X) and allowing the shoe (31) to be connected to the anti-rock system (36, 37).

13. A collector head according to claim 12, in which the guide means for the bow (23) are a calliper (49) one end of which is articulated on the bow (23), characterised in that the other end of the calliper (49) is articulated on the shoe (31).

FIG. 1

# FIG. 2

# FIG. 3

FIG. 4

FIG. 5

# FIG. 6